(19) **Europäisches Patentamt**
**European Patent Office**
**Office européen des brevets**

(11) **EP 4 046 466 B1**

(12) **FASCICULE DE BREVET EUROPEEN**

(45) Date de publication et mention de la délivrance du brevet:
**25.02.2026 Bulletin 2026/09**

(21) Numéro de dépôt: **20788833.0**

(22) Date de dépôt: **14.10.2020**

(51) Classification Internationale des Brevets (IPC):
***H05B 45/3725*** (2020.01)   ***H02M 3/158*** (2006.01)
***H05B 45/345*** (2020.01)

(52) Classification Coopérative des Brevets (CPC):
**H05B 45/345; H02M 3/1584; H05B 45/3725;**
H02M 3/1586

(86) Numéro de dépôt international:
**PCT/EP2020/078973**

(87) Numéro de publication internationale:
**WO 2021/074258 (22.04.2021 Gazette 2021/16)**

(54) **SYSTÈME D'ECLAIRAGE COMPRENANT UN CONVERTISSEUR DE PUISSANCE ENTRELACE MULTI-PHASE**

BELEUCHTUNGSSYSTEM MIT EINEM MEHRPHASIGEN VERSCHACHTELTEN STROMRICHTER

LIGHTING SYSTEM COMPRISING A MULTI-PHASE INTERLEAVED POWER CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2019 FR 1911448**

(43) Date de publication de la demande:
**24.08.2022 Bulletin 2022/34**

(73) Titulaire: **Valeo Vision**
**93012 Bobigny Cedex (FR)**

(72) Inventeurs:
• **KRICK, Sebastian**
**93012 BOBIGNY Cedex (FR)**
• **ZANTE, Guillaume**
**93012 BOBIGNY Cedex (FR)**

• **GIRAUD-SAUVEUR, Thomas**
**93012 BOBIGNY Cedex (FR)**
• **BODZIANY, Dominique**
**93012 BOBIGNY Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
| | |
|---|---|
| **EP-A1- 2 615 731** | **EP-A1- 2 615 731** |
| **EP-A1- 3 550 707** | **US-A1- 2015 137 787** |
| **US-A1- 2016 125 791** | **US-A1- 2016 125 791** |
| **US-A1- 2016 329 811** | **US-A1- 2018 138 815** |
| **US-A1- 2019 341 851** | **US-B1- 10 090 765** |
| **US-B1- 10 090 765** | **US-B2- 10 680 507** |

EP 4 046 466 B1

**Description**

L'invention concerne le domaine de l'éclairage automobile. Plus précisément, l'invention concerne un système d'éclairage intégrant un convertisseur de puissance de type entrelacé multi-phase ainsi qu'un procédé de contrôle d'un tel système d'éclairage.

Dans le domaine de l'éclairage automobile, il est connu des systèmes d'éclairage comportant suffisamment de sources lumineuses élémentaires contrôlables sélectivement, pour permettre la réalisation de fonctions lumineuses pixélisées, par exemple contenant au moins 500 pixels, voire plus de 10000 pixels, chaque pixel étant formé par un faisceau lumineux élémentaire émis par l'une des sources lumineuses élémentaires. Ce type de système d'éclairage permet au véhicule automobile de réaliser par exemple des fonctions d'éclairage de type route anti-éblouissement, dans laquelle certains pixels du faisceau route sont éteints ou atténués pour former une zone sombre au niveau d'un objet cible à ne pas éblouir, comme un véhicule suivi ou croisé.

Dans ce contexte, ce type de système d'éclairage requiert une puissance électrique importante, dans la mesure où les fonctions d'éclairages recherchées peuvent nécessiter une forte intensité lumineuse, et un courant électrique important. En effet, chaque pixel étant réalisé par une source lumineuse élémentaire, chaque source lumineuse élémentaire nécessite un courant électrique propre. Du fait du nombre de sources lumineuses élémentaires employées dans ce type de système d'éclairage, le courant électrique global requis peut ainsi être très élevé.

A cet effet, il est connu d'employer un convertisseur de puissance de type entrelacé multi-phase comprenant plusieurs convertisseurs élémentaires activables sélectivement. Chacun des convertisseurs élémentaires génère un signal électrique présentant une phase propre et les signaux électriques générés étant ainsi tous déphasés les uns par rapport aux autres. On peut ainsi générer un courant électrique global d'intensité très élevée. En outre, ce type de convertisseur de puissance présente l'avantage de permettre l'intégration de transistor MOS au niveau du contrôleur du convertisseur, d'employer des composants standards facilitant la conception et la fabrication du convertisseur et d'étaler l'échauffement du convertisseur sur une surface plus grande.

Toutefois, le rendement des convertisseurs élémentaires, et donc du convertisseur de puissance, décroit pour des besoins de courant de sortie faibles. Or, le profil de mission des systèmes d'éclairages considérés implique, dans un certain nombre de cas, qu'un nombre important de sources lumineuses élémentaires soient désactivées, par exemple pour des fonctions d'éclairage de type croisement, de type route anti-éblouissement ou encore de type écriture au sol. Dans ce cadre, le besoin en courant du système d'éclairage décroit et l'efficacité du convertisseur de puissance est remise en cause.

Autrement dit, le rapport entre la puissance électrique fournie en entrée et celle fournie en sortie du convertisseur de puissance n'est plus optimal, ce qui pose un problème dans le cadre de l'optimisation de la consommation électrique du véhicule automobile. EP2615731 A1 divulgue une architecture de convertisseur courant continu-courant continu (CC-CC), ledit convertisseur comprenant plusieurs modules de conversion, chacun étant apte à convertir un courant d'un premier niveau de tension (par ex. entrée batterie) vers une autre forme de tension (par ex. sortie régulée), et lesdits modules pouvant être activés ou désactivés dynamiquement en fonction des conditions de charge en temps réel. US10090765 B1 divulgue un circuit de commande d'un convertisseur multiphase pour un feux arrière de véhicule configuré pour déterminer un état de fonctionnement au niveau d'un module de convertisseur multiphase, chaque module de commutation de phase d'une pluralité de modules de commutation de phase étant configuré pour coupler électriquement, sur la base d'un signal de commutation respectif, une source de tension à une phase respective du module de convertisseur multiphase.

L'invention s'inscrit dans ce contexte et vise ainsi à optimiser le rendement d'un convertisseur de puissance de type entrelacé multi-phase d'un système d'éclairage de véhicule automobile, y compris pour des faibles besoins en courant électrique.

A ces fins, l'invention a pour objet un système d'éclairage d'un véhicule automobile comprenant :

    a. une source lumineuse,
    b. un convertisseur de puissance de type entrelacé multi-phase comprenant plusieurs convertisseurs élémentaires activables sélectivement, chaque convertisseur élémentaire étant agencé pour générer un signal électrique présentant une phase propre, le convertisseur de puissance étant agencé pour fournir une puissance électrique à ladite source lumineuse ; et
    c. un contrôleur agencé pour contrôler sélectivement chacun des convertisseurs élémentaires dudit convertisseur de puissance.

Le contrôleur est agencé pour recevoir une instruction d'émission d'un faisceau lumineux souhaité par la source lumineuse et pour activer un nombre strictement nécessaire de convertisseurs élémentaires du convertisseur de puissance de sorte à ce que le convertisseur de puissance fournisse à la source lumineuse une puissance électrique nécessaire à l'émission dudit faisceau lumineux souhaité.

L'invention tire parti du fait que les convertisseurs élémentaires d'un convertisseur de puissance de type entrelacé multi-phase peuvent être activés ou désactivés sélectivement. Or, le point d'inflexion, en termes de courant de sortie, de l'efficacité d'un convertisseur de puissance de type entrelacé multi-phase dépend du nombre de convertisseurs élémentaires activés. En effet, moins on active de convertisseurs élémentaires, plus la limite de courant de sortie pour laquelle on constate une inflexion de l'efficacité du convertisseur de puissance est faible. Bien entendu, la puissance électrique globale fournie par le convertisseur de puissance s'en trouve réduite, mais cette réduction n'est pas incompatible avec le besoin en termes de puissance électrique des fonctions d'éclairages considérées. On aboutit ainsi, grâce à l'activation du nombre strictement nécessaire de convertisseurs élémentaires, à un compromis entre puissance électrique fournie et efficacité du convertisseur de puissance.

Selon l'invention, les convertisseurs élémentaires pourront être des convertisseurs de type DC/DC, par exemple des convertisseurs de type abaisseur de tension, également appelé convertisseurs Buck. Par exemple, chaque convertisseur élémentaire pourra être agencé pour générer un signal électrique périodique, par exemple un signal électrique modulé en largeur d'impulsion (également appelé PWM, de l'anglais Pulse Width Modulation). Le cas échéant, les convertisseurs élémentaires sont agencés de sorte que les signaux électriques qu'ils génèrent soient déphasés les uns par rapport aux autres. Avantageusement, chacun des convertisseurs élémentaires présente une entrée d'activation pour recevoir un signal de contrôle commandant l'activation ou la désactivation du convertisseur, le contrôleur étant agencé pour émettre un signal de contrôle vers l'entrée d'activation de chacun des convertisseurs élémentaires pour activer ledit nombre strictement nécessaire de convertisseurs élémentaires.

Le contrôleur est agencé, à la réception de l'instruction d'émission dudit faisceau lumineux souhaité, pour déterminer ladite quantité de puissance électrique nécessaire à fournir à la source lumineuse pour l'émission dudit faisceau lumineux souhaité et pour déterminer un nombre de convertisseurs élémentaires strictement nécessaire à activer pour fournir ladite quantité de puissance électrique nécessaire.

Le contrôleur est agencé pour recevoir l'instruction d'émission du faisceau lumineux souhaité sous la forme d'une image numérique dudit faisceau lumineux souhaité , et pour déterminer ladite quantité de puissance électrique nécessaire à partir de ladite image numérique. L'instruction d'émission peut être par exemple émise par un calculateur du véhicule automobile, en fonction d'informations issues d'un ou plusieurs capteurs du véhicule automobile, comme une caméra, un radar ou un système de navigation. Le cas échéant, chaque pixel de l'image numérique reçue peut représenter l'intensité lumineuse du faisceau lumineux souhaité en un point de l'espace. Il pourra par exemple s'agir d'une image numérique représentant une projection sur un écran d'un faisceau d'éclairage de type croisement, de type éclairage de la route, de type éclairage anti-éblouissement dans lequel une zone sombre est formée dans le faisceau au niveau d'un objet à ne pas éblouir ou encore de type écriture au sol dans lequel un pictogramme est formé dans un faisceau de type croisement.

Par exemple, le contrôleur peut être agencé pour recevoir l'image numérique sous la forme d'une image en niveau de gris et pour déterminer ladite quantité de puissance électrique nécessaire en fonction de la somme des niveaux de gris de ladite image numérique reçue. Le cas échéant, le niveau de gris de chaque pixel peut représenter l'intensité lumineuse du faisceau lumineux souhaité en un point de l'espace. De préférence, le contrôleur peut déterminer ladite quantité de puissance électrique nécessaire en fonction de la somme des niveaux de gris, de la tension de sortie fournie par le convertisseur de puissance et de l'intensité crête des courants électriques circulant dans la source lumineuse et générés par la tension électrique des convertisseurs élémentaires.

Avantageusement, tous les convertisseurs élémentaires sont agencés pour que les signaux électriques qu'ils génèrent présentent une même puissance électrique. Par exemple, tous les convertisseurs élémentaires peuvent être agencés pour que les signaux électriques qu'ils génèrent soient des signaux électriques périodiques présentant une même intensité crête et un même rapport cyclique.

Avantageusement, un seul convertisseur élémentaire du convertisseur de puissance, dit maitre, est asservi en tension. Le cas échéant, le convertisseur maitre est agencé pour émettre une information relative à l'intensité du signal électrique qu'il génère à destination des autres convertisseurs élémentaires, dit esclaves, les convertisseurs esclaves étant chacun agencés pour générer un signal électrique d'intensité conforme à l'information reçue du convertisseur maitre. Par exemple, seul le convertisseur maitre comprend une boucle de rétroaction, les convertisseurs esclaves étant dépourvus de boucle de rétroaction entre leurs sorties et leurs entrées. Le cas échéant, le contrôleur peut être agencé pour conserver le convertisseur maitre activé quelle que soit la puissance électrique nécessaire déterminée.

Avantageusement, la source lumineuse comprend une pluralité de sources lumineuses élémentaires, chacune des sources lumineuses élémentaires étant agencée pour émettre un pixel lumineux, dans lequel l'instruction d'émission reçue par le contrôleur est une instruction d'émission d'un faisceau lumineux pixélisé souhaité et dans lequel le contrôleur est agencé pour contrôler sélectivement chacune des sources lumineuses élémentaires pour l'émission dudit faisceau lumineux pixélisé souhaité. Le cas échéant, le contrôleur peut être agencé pour émettre une instruction de contrôle à destination de la source lumineuse, l'instruction de contrôle comprenant l'image numérique reçue par le contrôleur. Par exemple, le faisceau lumineux pixélisé souhaité peut être un faisceau lumineux comprenant une pluralité de pixels, par exemple 500 pixels de dimensions comprises entre 0,05° et 0,2°, répartis selon une pluralité de lignes et de colonnes, par exemple 20 lignes et 25 colonnes.

On entend par source lumineuse élémentaire toute source de lumière éventuellement associée à un élément électro-optique, capable d'être activée et contrôlée sélectivement pour émettre un faisceau lumineux élémentaire dont l'intensité lumineuse est contrôlable. Il pourra notamment s'agir d'une puce à semi-conducteur émettrice de lumière, d'un élément émetteur de lumière d'une diode électroluminescente pixélisée monolithique, d'une portion d'un élément convertisseur de lumière excitable par une source de lumière ou encore d'une source de lumière associée à un cristal liquide ou à un micro-miroir.

L'invention a également pour objet un procédé de contrôle d'un système d'éclairage de véhicule automobile comprenant une source lumineuse, un convertisseur de puissance de type entrelacé multi-phase comprenant plusieurs convertisseurs élémentaires activables sélectivement, chaque convertisseur élémentaire étant agencé pour générer un signal électrique présentant une phase propre, le convertisseur de puissance étant agencé pour fournir une puissance électrique à ladite source lumineuse et un contrôleur agencé pour contrôler sélectivement chacun des convertisseurs élémentaire dudit convertisseur de puissance, le procédé comportant les étapes suivantes :

　　a. Réception par le contrôleur d'une instruction d'émission d'un faisceau lumineux souhaité par la source lumineuse ;

　　b. Détermination par le contrôleur d'une quantité de puissance électrique nécessaire à fournir par le convertisseur de puissance à la source lumineuse pour l'émission dudit faisceau lumineux souhaité ;

　　c. Détermination par le contrôleur d'un nombre de convertisseurs élémentaires strictement nécessaire à activer pour fournir ladite quantité de puissance électrique nécessaire ;

　　d. Activation par le contrôleur dudit nombre déterminé de convertisseurs élémentaires pour la fourniture de ladite quantité de puissance électrique nécessaire à la source lumineuse pour l'émission dudit faisceau lumineux souhaité.

Le cas échéant, le procédé de contrôle peut être mis en œuvre par le système d'éclairage selon l'invention.

Avantageusement, le contrôleur peut recevoir des instructions d'émission de façon séquentielle. Le cas échéant, à la réception d'une nouvelle instruction d'émission, le contrôleur peut activer un ou plusieurs des contrôleurs élémentaires désactivés ou désactiver un ou plusieurs des contrôleurs élémentaires activés suite à l'instruction de contrôle précédemment reçue de sorte à ce que le nombre de convertisseurs élémentaires activés qui a été déterminé à la suite de la réception de cette nouvelle instruction d'émission soit atteint. L'activation ou la désactivation des contrôleurs élémentaires peut par exemple être réalisée de façon incrémentale à partir du contrôleur maitre.

L'instruction d'émission du faisceau lumineux souhaité est reçue par le contrôleur sous la forme d'une image numérique dudit faisceau lumineux souhaité, et la quantité de puissance électrique nécessaire est déterminée par le contrôleur à partir de ladite image numérique. De préférence, l'image numérique reçue par le contrôleur est une image en niveau de gris, et la quantité de puissance électrique nécessaire déterminée par le contrôleur est une fonction de la somme des niveaux de gris de ladite image numérique reçue.

L'invention a également pour objet un programme d'ordinateur comprenant un code de programme qui est conçu pour mettre en œuvre le procédé selon l'invention lorsque ledit programme est exécuté par un ordinateur.

L'invention a également pour objet un support de données sur lequel est enregistré le programme d'ordinateur selon l'invention.

La présente invention est maintenant décrite à l'aide d'exemples uniquement illustratifs et nullement limitatifs de la portée de l'invention, et à partir des illustrations jointes, dans lesquelles :

　　[Fig. 1] représente, schématiquement et partiellement, un système d'éclairage de véhicule automobile selon un mode de réalisation de l'invention ;
　　[Fig. 2] représente un procédé de contrôle du système d'éclairage de la [Fig. 1] ;
　　[Fig. 3] représente des courbes d'efficacité du convertisseur de puissance du système d'éclairage de la [Fig. 1] ;
　　[Fig. 4] représente une instruction d'émission d'un faisceau de type croisement pour le système d'éclairage de la [Fig. 1] ; et
　　[Fig. 5] représente une instruction d'émission d'un faisceau de type route anti-éblouissement pour le système d'éclairage de la [Fig. 1].

Dans la description qui suit, les éléments identiques, par structure ou par fonction, apparaissant sur différentes figures conservent, sauf précision contraire, les mêmes références.

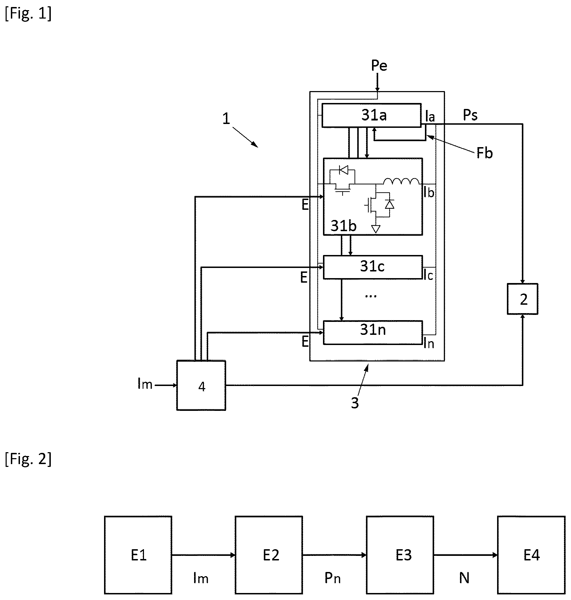

On a représenté en [Fig. 1] un système d'éclairage 1 d'un véhicule automobile selon un mode de réalisation de l'invention.

Ce système d'éclairage 1 comporte une source lumineuse pixélisée 2 apte à émettre un faisceau lumineux pixélisé. Dans l'exemple décrit, la source lumineuse pixélisée 2 est une diode électroluminescente pixélisée, par exemple monolithique, dont chacun des éléments émetteurs de lumière forme une source lumineuse élémentaire pouvant être activée et contrôlée sélectivement pour émettre un faisceau lumineux élémentaire dont l'intensité lumineuse est contrôlable et formant ainsi un pixel du faisceau lumineux pixélisé. La source lumineuse pixélisée 2 peut faire partie d'un module lumineux du système d'éclairage et y être ainsi associée à un élément optique permettant de mettre en forme les faisceaux lumineux élémentaires. Le système d'éclairage 2 peut en outre comporter d'autres sources ou modules lumineux, pixélisés ou non.

Afin de permettre l'émission d'un faisceau lumineux pixélisé, le système d'éclairage 1 comporte un convertisseur de puissance 3 agencé pour fournir, à partir d'une puissance électrique Pe reçue d'une source d'énergie du véhicule automobile comme une batterie, une puissance électrique Ps à la source lumineuse pixélisée 2. En outre, afin de contrôler l'intensité et la distribution du faisceau lumineux pixélisé, le système d'éclairage 1 comporte en outre un contrôleur 4 agencé pour contrôler d'une part la source lumineuse pixélisée 2, et plus spécifiquement chacune des sources lumineuses élémentaires de cette source 2, et d'autre part le convertisseur de puissance 3.

Le convertisseur de puissance 3 est un convertisseur de type entrelacé multi-phase comprenant une pluralité de convertisseurs élémentaires 31a à 31n. Dans l'exemple décrit, chaque convertisseur 31a à 31n est un convertisseur DC/DC de type Buck agencé pour générer, à partir de la puissance électrique Pe, un signal électrique modulé en largeur d'impulsion présentant une intensité crête, une phase et un rapport cyclique donnés. Les convertisseurs 31a à 31n présentent une structure sensiblement identique, telle que montrée pour le convertisseur 31b, si bien que les signaux électriques qu'ils génèrent présentent la même intensité crête et le même rapport cyclique. En revanche, leurs phases sont différentes, de sorte à ce que ces signaux soient déphasés les uns par rapport aux autres. L'ensemble des signaux électriques forment ainsi la puissance électrique Ps fournie à la source lumineuse pixélisée 2, cette puissance électrique Ps étant caractérisée par un courant électrique suffisamment élevé pour convenir à l'alimentation de la source 2 compte tenu du nombre de sources lumineuses élémentaires qu'elle comprend.

Bien que la structure des convertisseurs 31a à 31n soit sensiblement identique, seul le premier convertisseur élémentaire 31a, dit maitre, est asservi en tension. Ce convertisseur 31a comporte à cet effet une boucle de rétroaction Fb pour que le courant $I_a$ fourni en sortie de ce convertisseur 31a soit conforme à une valeur de consigne donnée. En outre, les autres convertisseurs 31b à 31n sont des convertisseurs esclaves, dépourvus de boucle de rétroaction depuis la sortie du convertisseur de puissance 3. Le convertisseur maitre 31a transmet, via des lignes de contrôle, l'intensité crête du signal électrique $I_a$ qu'il génère à destination des autres convertisseurs esclaves 31b à 31n. Ces convertisseurs esclaves sont chacun agencés pour générer un signal électrique $I_b$ à $I_n$ d'intensité crête sensiblement égale à cette intensité crête $I_a$.

Chacun des convertisseurs esclaves 31b à 31n présente une entrée d'activation E pour recevoir un signal de contrôle depuis le contrôleur 4 commandant l'activation ou la désactivation de ce convertisseur, par exemple par commutation de la ligne d'alimentation de ce convertisseur.

On va maintenant décrire, en lien avec la [Fig. 2], un procédé de contrôle du système d'éclairage 1 au moyen du contrôleur 4.

Lors d'une première étape E1, le contrôleur 4 reçoit une instruction d'émission Im d'un faisceau lumineux pixélisé souhaité par la source lumineuse pixélisé 2. Cette instruction d'émission Im est émise par un calculateur du véhicule automobile (non représenté), en fonction d'informations issues d'un ou plusieurs capteurs du véhicule automobile, comme une caméra, un radar ou un système de navigation. Dans la présente invention, l'instruction d'émission est reçue sous la forme d'une image numérique Im représentant, en niveau de gris, une projection dudit faisceau lumineux pixélisé souhaité. En d'autres termes, chaque pixel de l'image numérique reçue Im représente, via une valeur en niveau de gris, l'intensité lumineuse du faisceau lumineux souhaité en un point de l'espace.

Lors d'une deuxième étape E2, le contrôleur 4 détermine une quantité de puissance électrique nécessaire Pn à fournir par le convertisseur de puissance 3 à la source lumineuse 2 pour l'émission dudit faisceau lumineux souhaité. Par exemple, le contrôleur pourra déterminer cette puissance électrique nécessaire Pn au moyen de l'équation suivante :

[Math. 1]

$$Pn = V_s \cdot I_{peak} \cdot \sum_i G_i \ ,$$

ou $V_s$ est la tension électrique fournie en sortie du convertisseur de puissance 3, $I_{peak}$ est l'intensité crête des courants électriques circulant dans la source lumineuse pixélisée 2 et générés par la tension électrique fournie par les convertisseurs élémentaires 31a à 31n et $\sum_i G_i$ est la somme des valeurs en niveau de gris de chaque pixel de l'image Im.

Lors d'une troisième étape E3, le contrôleur 4 détermine un nombre N de convertisseurs élémentaires 31b à 31n strictement nécessaire à activer pour fournir ladite quantité de puissance électrique nécessaire Pn, le convertisseur maitre 31a restant dans tous les cas activé.

La détermination du nombre N de convertisseurs 31b à 31n strictement nécessaire à activer peut être réalisée par le contrôleur 4 de sorte, d'une part, à obtenir un courant électrique en sortie du convertisseur de puissance 3 dont l'intensité est suffisante au regard du nombre de sources lumineuses élémentaires de la source lumineuse pixélisée devant être activées pour la réalisation du faisceau lumineux pixélisé de l'instruction d'émission Im et, d'autre part, à obtenir une efficacité optimale du convertisseur de puissance 3.

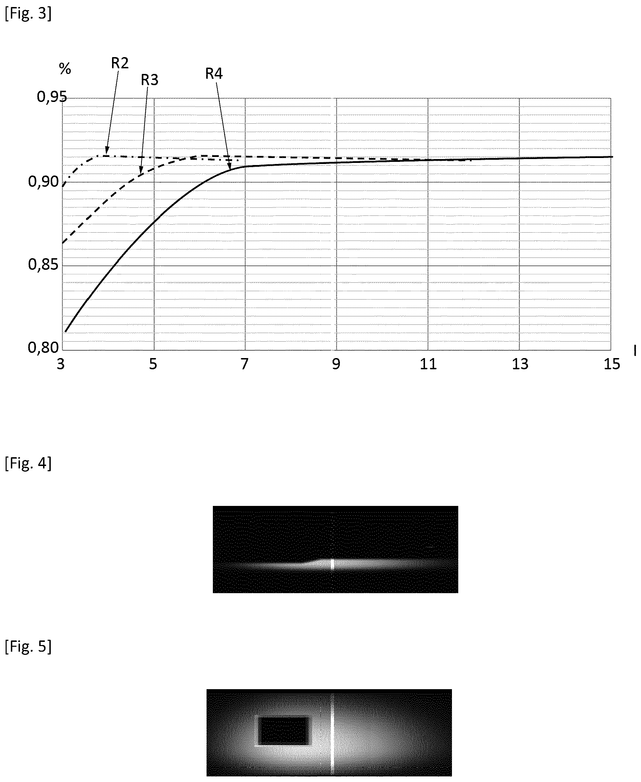

On a représenté en [Fig. 3] des courbes R2, R3 et R4 représentant l'évolution de l'efficacité du convertisseur de puissance 3 (à savoir la puissance Ps fournie par le convertisseur 3 divisée par la puissance Pe fournie en entrée du convertisseur 3) selon l'intensité du courant fourni par ce convertisseur de puissance 3, lorsqu'on active respectivement 2, 3 et 4 convertisseurs élémentaires.

On constate que le point d'inflexion, auquel l'efficacité devient sensiblement optimale (environ 93%) et constante, est plus faible lorsque moins de convertisseurs élémentaires sont activés. Ainsi, lorsque le faisceau lumineux pixélisé requis présente peu de pixels allumés, comme c'est le cas pour un faisceau de croisement tel que représenté en [Fig. 4], peu de sources lumineuses élémentaires de la source lumineuse 2 doivent être activées. Le besoin en courant et donc en puissance électrique fournie par le convertisseur de puissance 3 est donc peu important et on peut donc maximiser l'efficacité de ce convertisseur 3 en n'activant que seulement deux convertisseurs élémentaires 31a et 31b. En revanche, lorsque le faisceau lumineux pixélisé requis présente beaucoup de pixels allumés, comme c'est le cas pour un faisceau de route anti-éblouissement tel que représenté en [Fig. 5], le besoin en courant augmente. On maximise ainsi l'efficacité du convertisseur 3 tout en répondant à ce besoin en activant des convertisseurs élémentaires supplémentaires 31c et 31d.

Ainsi, dans une étape E4, le contrôleur 3 recevant des instructions d'émission séquentielles, il active ou désactive ainsi les contrôleurs élémentaires 31b à 31c du convertisseur de puissance 3, via leurs entrées d'activation E, de façon incrémentale pour atteindre le nombre N de convertisseurs précédemment déterminer, de sorte à adapter la puissance électrique fournie en réponse à l'instruction précédente à la nouvelle puissance nécessaire Pn pour la nouvelle instruction Im. Dans un même temps, le contrôleur 3 transmettra à la source lumineuse 2 l'image numérique Im de sorte à contrôler l'activation ou la désactivation de chacun des sources lumineuses élémentaires pour l'émission d'un faisceau lumineux pixélisé correspondant à cette image numérique Im.

La description qui précède explique clairement comment l'invention permet d'atteindre les objectifs qu'elle s'est fixée, et notamment en proposant un système d'éclairage qui emploie un convertisseur de puissance entrelacé multi-phase et un procédé de contrôle de ce système d'éclairage qui active un nombre strictement nécessaire de convertisseurs élémentaires du convertisseur de puissance en fonction de l'instruction d'émission reçue par le système. On comprend ainsi que l'utilisation d'un convertisseur de puissance entrelacé multi-phase permet de satisfaire des besoins importants de courant électrique d'une source lumineuse, en particulier lorsqu'elle est pixélisée, et que l'activation du nombre strictement nécessaire de convertisseurs élémentaires permet d'optimiser l'efficacité du convertisseur de puissance en fonction de la puissance électrique nécessaire à la réalisation de l'instruction d'émission reçue.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra prévoir d'autres modes de calcul de la puissance électrique nécessaire pour la réalisation d'une instruction d'émission donnée, d'autres modes de sélection du nombre de convertisseurs élémentaires strictement nécessaire, voire d'autres structures du convertisseur de puissance entrelacé multi-phase que ceux décrits.

**Revendications**

1. Système d'éclairage (1) d'un véhicule automobile comprenant :

   a. une source lumineuse (2),
   b. un convertisseur de puissance (3) de type entrelacé multi-phase comprenant plusieurs convertisseurs élémentaires (31a, 31b, 31c, 31n) activables sélectivement, chaque convertisseur élémentaire étant agencé pour générer un signal électrique (Ia, Ib, Ic, In) présentant une phase propre, le convertisseur de puissance étant agencé pour fournir une puissance électrique (Ps) à ladite source lumineuse ; et
   c. un contrôleur (4) agencé pour contrôler sélectivement chacun des convertisseurs élémentaires dudit convertisseur de puissance ;
   **caractérisé en ce que** le contrôleur est agencé pour recevoir une instruction d'émission (Im) d'un faisceau lumineux souhaité par la source lumineuse et pour activer un nombre strictement nécessaire (N) de convertisseurs élémentaires du convertisseur de puissance de sorte à ce que le convertisseur de puissance fournisse à la source lumineuse une puissance électrique nécessaire (Pn) à l'émission dudit faisceau lumineux souhaité,
   et **en ce que** le contrôleur (4) est agencé pour recevoir l'instruction d'émission (Im) du faisceau lumineux souhaité sous la forme d'une image numérique dudit faisceau lumineux souhaité, et pour déterminer ladite quantité de puissance électrique nécessaire (Pn) à partir de ladite image numérique.

2. Système d'éclairage (1) selon la revendication précédente, dans lequel le contrôleur (4) est agencé, à la réception de l'instruction d'émission (Im) dudit faisceau lumineux souhaité, pour déterminer ladite quantité de puissance électrique nécessaire (Pn) à fournir à la source lumineuse pour l'émission dudit faisceau lumineux souhaité et pour déterminer un nombre de convertisseurs élémentaires (31a, 31b, 31c, 31n) strictement nécessaire (N) à activer pour fournir ladite quantité de puissance électrique nécessaire.

3.  Système d'éclairage (1) selon l'une des revendications précédentes, dans lequel tous les convertisseurs élémentaires (31a, 31b, 31c, 31n) sont agencés pour que les signaux électriques (Ia, Ib, Ic, In) qu'ils génèrent présentent une même puissance électrique.

4.  Système d'éclairage (1) selon la revendication précédente, dans lequel un seul convertisseur élémentaire (31a) du convertisseur de puissance (3), dit maitre, est asservi en tension, et est agencé pour émettre une information relative à l'intensité du signal électrique (Ia) qu'il génère à destination des autres convertisseurs élémentaires (31b, 31c, 31), dit esclaves, les convertisseurs esclaves étant chacun agencés pour générer un signal électrique (Ib, Ic, In) d'intensité conforme à l'information reçue du convertisseur maitre.

5.  Système d'éclairage (1) selon l'une des revendications précédentes, dans lequel la source lumineuse (2) comprend une pluralité de sources lumineuses élémentaires, chacune des sources lumineuses élémentaires étant agencée pour émettre un pixel lumineux, dans lequel l'instruction d'émission (Im) reçue par le contrôleur (4) est une instruction d'émission d'un faisceau lumineux pixélisé souhaité et dans lequel le contrôleur est agencé pour contrôler sélectivement chacune des sources lumineuses élémentaires pour l'émission dudit faisceau lumineux pixélisé souhaité.

6.  Procédé de contrôle d'un système d'éclairage (1) de véhicule automobile comprenant une source lumineuse (2), un convertisseur de puissance (3) de type entrelacé multi-phase comprenant plusieurs convertisseurs élémentaires (31, 31b, 31c, 31n) activables sélectivement, chaque convertisseur élémentaire étant agencé pour générer un signal électrique (Ia, Ib, Ic, Id) présentant une phase propre, le convertisseur de puissance étant agencé pour fournir une puissance électrique (Ps) à ladite source lumineuse et un contrôleur (4) agencé pour contrôler sélectivement chacun des convertisseurs élémentaire dudit convertisseur de puissance, le procédé étant **caractérisé par** les étapes suivantes :

    a. (E1) Réception par le contrôleur d'une instruction d'émission (Im) d'un faisceau lumineux souhaité par la source lumineuse ;

    b. (E2) Détermination par le contrôleur d'une quantité de puissance électrique nécessaire (Pn) à fournir par le convertisseur de puissance à la source lumineuse pour l'émission dudit faisceau lumineux souhaité ;

    c. (E3) Détermination par le contrôleur d'un nombre de convertisseurs élémentaires strictement nécessaire (N) à activer pour fournir ladite quantité de puissance électrique nécessaire ;

    d. (E4) Activation par le contrôleur dudit nombre déterminé de convertisseurs élémentaires pour la fourniture de ladite quantité de puissance électrique nécessaire à la source lumineuse pour l'émission dudit faisceau lumineux souhaité, et en ce que l'instruction d'émission (Im) du faisceau lumineux souhaité est reçue par le contrôleur (4) sous la forme d'une image numérique dudit faisceau lumineux souhaité, et dans lequel la quantité de puissance électrique nécessaire (Pn) est déterminée par le contrôleur à partir de ladite image numérique.

7.  Programme d'ordinateur comprenant un code de programme qui est conçu pour mettre en œuvre le procédé selon la revendication lorsque ledit programme est exécuté par un ordinateur.

8.  Support de données sur lequel est enregistré le programme d'ordinateur selon la revendication 7.

**Patentansprüche**

1.  Beleuchtungssystem (1) eines Kraftfahrzeugs, umfassend:

    a. eine Lichtquelle (2),
    b. einen Leistungswandler (3) vom verschachtelten Mehrphasentyp, der mehrere selektiv aktivierbare Elementarwandler (31a, 31b, 31c, 31n) umfasst, wobei jeder Elementarwandler eingerichtet ist, um ein elektrisches Signal (Ia, Ib, Ic, In) mit einer eigenen Phase zu erzeugen, wobei der Leistungswandler eingerichtet ist, um der Lichtquelle eine elektrische Leistung (Ps) zu liefern; und
    c. eine Steuerung (4), die eingerichtet ist, um jeden der Elementarwandler des Leistungswandlers selektiv zu steuern;
    **dadurch gekennzeichnet, dass** die Steuerung eingerichtet ist, um eine Emissionsanweisung (Im) für einen gewünschten Lichtstrahl durch die Lichtquelle zu empfangen und eine streng notwendige Anzahl (N) von Elementarwandlern des Leistungswandlers zu aktivieren, so dass der Leistungswandler der Lichtquelle eine für die Emission des gewünschten Lichtstrahls notwendige elektrische Leistung (Pn) liefert,

und dadurch, dass die Steuerung (4) eingerichtet ist, um die Emissionsanweisung (Im) des gewünschten Lichtstrahls in Form eines digitalen Bildes des gewünschten Lichtstrahls zu empfangen und die notwendige Menge an elektrischer Leistung (Pn) aus dem digitalen Bild zu bestimmen.

2. Beleuchtungssystem (1) nach dem vorhergehenden Anspruch, wobei die Steuerung (4) eingerichtet ist, bei Empfang der Emissionsanweisung (Im) des gewünschten Lichtstrahls, die notwendige Menge an elektrischer Leistung (Pn) zu bestimmen, die der Lichtquelle für die Emission des gewünschten Lichtstrahls zugeführt werden muss, und eine streng notwendige Anzahl (N) von zu aktivierenden Elementarwandlern (31a, 31b, 31c, 31n) zu bestimmen, um die notwendige Menge an elektrischer Leistung zu liefern.

3. Beleuchtungssystem (1) nach einem der vorhergehenden Ansprüche, wobei alle Elementarwandler (31a, 31b, 31c, 31n) so eingerichtet sind, dass die von ihnen erzeugten elektrischen Signale (Ia, Ib, Ic, In) die gleiche elektrische Leistung aufweisen.

4. Beleuchtungssystem (1) nach dem vorhergehenden Anspruch, wobei nur ein Elementarwandler (31a) des Leistungswandlers (3), genannt Master, spannungsgeregelt ist und eingerichtet ist, um eine Information bezüglich der Intensität des von ihm erzeugten elektrischen Signals (Ia) an die anderen Elementarwandler (31b, 31c, 31), genannt Slaves, zu senden, wobei die Slave-Wandler jeweils eingerichtet sind, um ein elektrisches Signal (Ib, Ic, In) mit einer Intensität zu erzeugen, die der vom Master-Wandler empfangenen Information entspricht.

5. Beleuchtungssystem (1) nach einem der vorhergehenden Ansprüche, wobei die Lichtquelle (2) eine Vielzahl von Elementarlichtquellen umfasst, wobei jede der Elementarlichtquellen eingerichtet ist, um einen Lichtpixel zu emittieren, wobei die von der Steuerung (4) empfangene Emissionsanweisung (Im) eine Anweisung zur Emission eines gewünschten pixelierten Lichtstrahls ist und wobei die Steuerung eingerichtet ist, um jede der Elementarlichtquellen selektiv für die Emission des gewünschten pixelierten Lichtstrahls zu steuern.

6. Verfahren zur Steuerung eines Beleuchtungssystems (1) eines Kraftfahrzeugs, umfassend eine Lichtquelle (2), einen Leistungswandler (3) vom verschachtelten Mehrphasentyp, der mehrere selektiv aktivierbare Elementarwandler (31, 31b, 31c, 31n) umfasst, wobei jeder Elementarwandler eingerichtet ist, um ein elektrisches Signal (Ia, Ib, Ic, Id) mit einer eigenen Phase zu erzeugen, wobei der Leistungswandler eingerichtet ist, um der Lichtquelle eine elektrische Leistung (Ps) zu liefern, und eine Steuerung (4), die eingerichtet ist, um jeden der Elementarwandler des Leistungswandlers selektiv zu steuern, wobei das Verfahren durch die folgenden Schritte gekennzeichnet ist:

a. (E1) Empfang durch die Steuerung einer Emissionsanweisung (Im) für einen gewünschten Lichtstrahl durch die Lichtquelle;
b. (E2) Bestimmung durch die Steuerung einer notwendigen Menge an elektrischer Leistung (Pn), die vom Leistungswandler an die Lichtquelle für die Emission des gewünschten Lichtstrahls zu liefern ist;
c. (E3) Bestimmung durch die Steuerung einer streng notwendigen Anzahl (N) von zu aktivierenden Elementarwandlern, um die notwendige Menge an elektrischer Leistung zu liefern;
d. (E4) Aktivierung durch die Steuerung der bestimmten Anzahl von Elementarwandlern für die Lieferung der notwendigen Menge an elektrischer Leistung an die Lichtquelle für die Emission des gewünschten Lichtstrahls, und dadurch, dass

die Emissionsanweisung (Im) des gewünschten Lichtstrahls von der Steuerung (4) in Form eines digitalen Bildes des gewünschten Lichtstrahls empfangen wird, und wobei die notwendige Menge an elektrischer Leistung (Pn) von der Steuerung aus dem digitalen Bild bestimmt wird.

7. Computerprogramm, umfassend einen Programmcode, der dazu ausgelegt ist, das Verfahren nach Anspruch 6 zu implementieren, wenn das Programm von einem Computer ausgeführt wird.

8. Datenträger, auf dem das Computerprogramm nach Anspruch 7 gespeichert ist.

**Claims**

1. Lighting system (1) of a motor vehicle comprising:

a. a light source (2),
b. a multi-phase interleaved power converter (3) comprising several elementary converters (31a, 31b, 31c, 31n) that can be selectively activated, each elementary converter being arranged to generate an electrical signal (Ia, Ib, Ic, In) having its own phase, the power converter being arranged to supply electrical power (Ps) to said light source; and
c. a controller (4) arranged to selectively control each of the elementary converters of said power converter;

**characterized in that** the controller is arranged to receive an emission instruction (Im) for a desired light beam from the light source and to activate a strictly necessary number (N) of elementary converters of the power converter so that the power converter supplies to the light source the necessary electrical power (Pn) for the emission of said desired light beam, and **in that** the controller (4) is arranged to receive the emission instruction (Im) of the desired light beam in the form of a digital image of said desired light beam, and to determine said quantity of necessary electrical power (Pn) from said digital image.

2. Lighting system (1) according to the preceding claim, wherein the controller (4) is arranged, upon receiving the emission instruction (Im) of said desired light beam, to determine said quantity of necessary electrical power (Pn) to be supplied to the light source for the emission of said desired light beam and to determine a strictly necessary number (N) of elementary converters (31a, 31b, 31c, 31n) to activate to provide said quantity of necessary electrical power.

3. Lighting system (1) according to one of the preceding claims, wherein all elementary converters (31a, 31b, 31c, 31n) are arranged so that the electrical signals (Ia, Ib, Ic, In) they generate have the same electrical power.

4. Lighting system (1) according to the preceding claim, wherein only one elementary converter (31a) of the power converter (3), called master, is voltage-controlled, and is arranged to emit information relating to the intensity of the electrical signal (Ia) it generates to the other elementary converters (31b, 31c, 31), called slaves, the slave converters each being arranged to generate an electrical signal (Ib, Ic, In) of intensity conforming to the information received from the master converter.

5. Lighting system (1) according to one of the preceding claims, wherein the light source (2) comprises a plurality of elementary light sources, each of the elementary light sources being arranged to emit a light pixel, wherein the emission instruction (Im) received by the controller (4) is an instruction for emission of a desired pixelated light beam and wherein the controller is arranged to selectively control each of the elementary light sources for the emission of said desired pixelated light beam.

6. Method for controlling a lighting system (1) of a motor vehicle comprising a light source (2), a multi-phase interleaved power converter (3) comprising several elementary converters (31, 31b, 31c, 31n) that can be selectively activated, each elementary converter being arranged to generate an electrical signal (Ia, Ib, Ic, Id) having its own phase, the power converter being arranged to supply electrical power (Ps) to said light source and a controller (4) arranged to selectively control each of the elementary converters of said power converter, the method being **characterized by** the following steps:

    a. (E1) Reception by the controller of an emission instruction (Im) for a desired light beam from the light source;
    b. (E2) Determination by the controller of a quantity of necessary electrical power (Pn) to be supplied by the power converter to the light source for the emission of said desired light beam;
    c. (E3) Determination by the controller of a strictly necessary number (N) of elementary converters to activate to provide said quantity of necessary electrical power;
    d. (E4) Activation by the controller of said determined number of elementary converters for the supply of said quantity of necessary electrical power to the light source for the emission of said desired light beam, and in that

the emission instruction (Im) of the desired light beam is received by the controller (4) in the form of a digital image of said desired light beam, and wherein the quantity of necessary electrical power (Pn) is determined by the controller from said digital image.

7. Computer program comprising a program code that is designed to implement the method according to claim 6 when said program is executed by a computer.

8. Data medium on which the computer program according to claim 7 is recorded.

[Fig. 1]

[Fig. 2]

[Fig. 3]

[Fig. 4]

[Fig. 5]

**EP 4 046 466 B1**

## RÉFÉRENCES CITÉES DANS LA DESCRIPTION

**Documents brevets cités dans la description**

- EP 2615731 A1

- US 10090765 B1